# EUROPÄISCHE PATENTSCHRIFT

(11) **EP 0 870 192 B1**
(45) Veröffentlichungstag und Bekanntmachung des Hinweises auf die Patenterteilung: **14.11.2007**
(21) Anmeldenummer: 97937450.1
(22) Anmeldetag: 14.08.1997
(51) Int. Cl.: G01N 27/407

(54) **MESSEINRICHTUNG**
MEASUREMENT DEVICE
DISPOSITIF DE MESURE

(30) Priorität: 29.10.1996 DE 19644757
(43) Veröffentlichungstag der Anmeldung: 14.10.1998
(73) Patentinhaber: ROBERT BOSCH GMBH, 70442 Stuttgart (DE)
(72) Erfinder: WEYL, Helmut, D-71701 Schwieberdingen (DE); WILD, Bernhard, D-71706 Markgröningen (DE); WIEDENMANN, Hans-Martin, D-70195 Stuttgart (DE)
(86) Internationale Anmeldenummer: PCT/DE1997/001726
(87) Internationale Veröffentlichungsnummer: WO 1998/019154

(56) Entgegenhaltungen:
- EP-A- 0 424 746
- DE-A- 2 702 578
- DE-A- 4 439 854
- US-A- 4 216 351
- US-A- 4 923 587

## Beschreibung

Die Erfindung betrifft eine Meßeinrichtung, insbesondere elektrochemischen Meßfühler, mit den im Oberbegriff des Anspruchs 1 genannten Merkmalen.

### Stand der Technik

Meßeinrichtungen der gattungsgemäßen Art sind bekannt. So werden beispielsweise in einer sogenannten Fingerbauform ausgebildete elektrochemische Meßfühler in Kraftfahrzeugen zur Bestimmung des Sauerstoffgehaltes in Abgasen von Verbrennungsmotoren eingesetzt. Diese Meßeinrichtungen besitzen ein unmittelbar an einer Meßstelle angeordnetes Sensorelement, das in einem Gehäuse dicht festgelegt ist.

Das Sensorelement weist bekanntermaßen einen zwischen zwei Elektroden angeordneten Festkörperelektrolyten auf. Je nach Ausstattung des Sensorelementes ist eine zusätzliche Heizeinrichtung vorgesehen. Um die mit dem Sensorelement ermittelten Sensorsignale auszuwerten, beziehungsweise dem Sensorelement die notwendige Heizspannung zuzuführen, sind elektrische Verbindungsleitungen vorgesehen, die das Sensorelement mit einer entsprechenden Schaltungsanordnung verbinden.

Da das Sensorelement, beispielsweise beim Messen des Sauerstoffgehaltes in Abgasen, in einem Bereich angeordnet ist, der mit einer relativ hohen Temperatur beaufschlagt wird und in dem eine erhöhte Verschmutzungsgefahr besteht, ist es bekannt, die elektrischen Verbindungsleitungen zumindest in der Nähe der Meßeinrichtung geschützt zu führen. Hierzu ist aus der DE 28 05 598 bekannt, die elektrischen Verbindungsleitungen in einer als Hohlleitung bezeichneten Schutzeinrichtung zu führen. Diese auch aus einem elastischen Schlauch bestehende Hohlleitung greift an einem Bund des Gehäuses der Meßeinrichtung an und bildet mit diesem einen Dichtsitz. Hierbei besteht ein Formschluß zwischen der Schutzeinrichtung und dem Gehäuse. Bei dem bekannten Dichtsitz ist nachteilig, daß zwar ein ausreichender Schutz gegen grobe Verunreinigungen, beispielsweise durch Spritzwasser, besteht, jedoch feine Verunreinigungen, die beispielsweise durch einen nebelartigen Niederschlag verursacht werden, wie dies gerade auch am Einbauort der Meßeinrichtungen in Kraftfahrzeugen vorkommt, keine ausreichende Dichtwirkung entgegengesetzt wird. Der nebelartige Niederschlag kriecht entlang der den Dichtsitz bildenden Dichtflächen der Schutzeinrichtung und des Gehäuses entlang und gelangt so in das Innere der Meßeinrichtung.

DE 2702578 offenbart den Oberbegriff von Anspruch 1.

Diese Schutzeinrichtung besitzt ferner den Nachteil, daß sie keinen ausreichenden Schutz der elektrischen Verbindungsleitungen gegen äußere mechanische Beschädigungen, beispielsweise durch scharfes Abknicken und am Einbauort der Meßeinrichtung auftretenden relativ hohen Temperaturen bietet.

### Vorteile der Erfindung

Die erfindungsgemäße Meßeinrichtung mit den im Anspruch 1 genannten Merkmalen bietet demgegenüber den Vorteil, daß sie einfach aufgebaut ist und einen hohen Dichtigkeitsschutz bietet. Dadurch, daß die Schutzeinrichtung mit dem Gehäuse über eine das Gehäuse und die Schutzeinrichtung umgreifende Befestigungseinrichtung zur Ausbildung eines Dichtsitzes kraft- und formschlüssig verbunden ist, wird eine absolute Dichtigkeit des Dichtsitzes erreicht. Selbst das Angreifen von nebelartigen Verunreinigungen wird durch den Form- und Kraftschluß zwischen der Schutzeinrichtung und dem Gehäuse eine Barriere entgegengesetzt, so daß ein Passieren des Dichtsitzes durch ein Entlangkriechen der Verunreinigungen ausgeschlossen ist.

In bevorzugter Ausgestaltung der Erfindung ist weiterhin vorgesehen, daß das Gehäuse im Bereich des Dichtsitzes zumindest bereichsweise eine Beschichtung aufweist, die einen Form- und Kraftschluß zwischen dem Gehäuse und der Schutzeinrichtung ausbildet, wobei die Beschichtung vorzugsweise eine PTFE (Polytetrafluorethylen)-Beschichtung ist. Hierdurch wird erreicht, daß zwischen der PTFE-Beschichtung des Gehäuses und der vorzugsweise aus einem PTFE-Material bestehenden Schutzeinrichtung ein Kraftschluß durch die hydrophoben Eigenschaften des PTFE-Materials entsteht. Durch die hiermit verbundene wasserabstoßende Wirkung wird das Eindringen von Feuchtigkeit über den Dichtsitz in das Gehäuse sicher vermieden.

Aufgrund der hohen Temperaturbeständigkeit des PTFE-Materials ist es darüber hinaus geeignet, auch bei einer Temperaturbelastung des Gehäuses der Meßeinrichtung eine dauerhafte Dichtwirkung sicherzustellen.

In weiterer bevorzugter Ausgestaltung der Erfindung ist vorgesehen, daß die Beschichtung eine PFA (Polyfluoramid)-Beschichtung ist. Hierdurch kann die Eigenschaft des Materials, nämlich ab einer bestimmten Temperatur eine Klebwirkung zu entfalten, ausgenutzt werden, indem der Dichtsitz auf diese notwendige Temperatur erwärmt wird. Durch die Erwärmung verflüssigt sich die PFA-Beschichtung und realisiert einen form- und kraftschlüssigen Dichtsitz zwischen der Schutzeinrichtung und dem Gehäuse. Bevorzugt ist vorgesehen, durch eine gezielte Erwärmung, insbesondere durch eine induktive Erwärmung, die PFA-Beschichtung nur teilweise zu verflüssigen, so daß diese formstabil bleibt und ein definiertes Herstellen des Dichtsitzes gestattet. Hierdurch wird in einfacher Weise unter den gegebenen Einsatzbedingungen der Meßeinrichtung eine dauerhafte Abdichtung des Innenraumes der Meßeinrichtung an dem Dichtsitz zwischen der Schutzeinrichtung und dem Gehäuse sichergestellt.

In bevorzugter Ausgestaltung der Erfindung ist vorgesehen, daß die Schutzeinrichtung ein elastisches Hohlelement ist, dessen Mantel zumindest bereichsweise strukturiert ist. Hierdurch wird vorteilhaft erreicht, daß durch die Strukturierung einerseits die Flexibilität des Hohlelementes erhalten bleibt, andererseits jedoch eine mechanische Stabilisierung eintritt, die ein scharfkantiges Abknicken der Hohlleitung und damit der in der Hohlleitung geführten elektrischen Verbindungsleitungen verhindert.

In vorteilhafter Ausgestaltung der Erfindung ist vorgesehen, daß das elastische Hohlelement an seinen Enden Befestigungsabschnitte aufweist, die ein einfaches und dichtes Befestigen des Hohlelementes an dem Sensorelement einerseits und einer Kontaktierungseinrichtung für die elektrischen Verbindungsleitungen andererseits gestatten. Die Befestigungsabschnitte sind vorzugsweise so ausgebildet, daß diese mit entsprechenden Paßstücken des Sensorelementes beziehungsweise der Kontaktierungseinrichtung unter Zuhilfenahme einer hülsenartigen Befestigungseinrichtung unlösbar verbunden werden können. Hierdurch wird sehr vorteilhaft eine flächenhafte Berührung zwischen dem elastischen Hohlelement und dem Sensorelement beziehungsweise der Kontaktierungseinrichtung gewährleistet, die ein dauerhaftes, auch unter Temperatureinwirkung beziehungsweise mechanischer Belastung anhaltendes Dichtverhalten garantiert.

Ferner ist in bevorzugter Ausgestaltung der Erfindung vorgesehen, daß das elastische Hohlelement aus einem PTFE-Material besteht. Hierdurch wird sichergestellt, da bekannterweise dieses Material eine hohe Temperaturbeständigkeit besitzt, und um so geringer die Materialstärke ist, um so geringer ein temperaturabhängiges Fließen des Materials eintritt, daß eine besonders gute Eignung für ein die Befestigungsenden aufweisendes elastisches Hohlelement gegeben ist. Insbesondere an der dem Sensorelement, also den relativ hohen Temperaturen ausgesetztem Befestigungsabschnitt, kann so eine dauerhafte dichte, mechanischen Beanspruchungen aussetzbare Verbindung geschaffen werden.

Weitere vorteilhafte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: in einem schematischen Längsschnitt eine Meßeinrichtung;
- Figur 2: einen Längsschnitt durch ein elastisches Hohlelement;

- Figuren 3 und 4: Längsschnitte durch eine Schutzhülse;
- Figur 5: schematisch die Herstellung eines Dichtsitzes;
- Figur 6: einen Längsschnitt durch eine Verstemmhülse;
- Figur 7: einen Längsschnitt und eine Draufsicht einer weiteren Tülle;
- Figur 8: einen Längsschnitt und eine Draufsicht einer weiteren Tülle und
- Figur 9: einen Längsschnitt durch eine weitere Verstemmhülse.

### Beschreibung der Ausführungsbeispiele

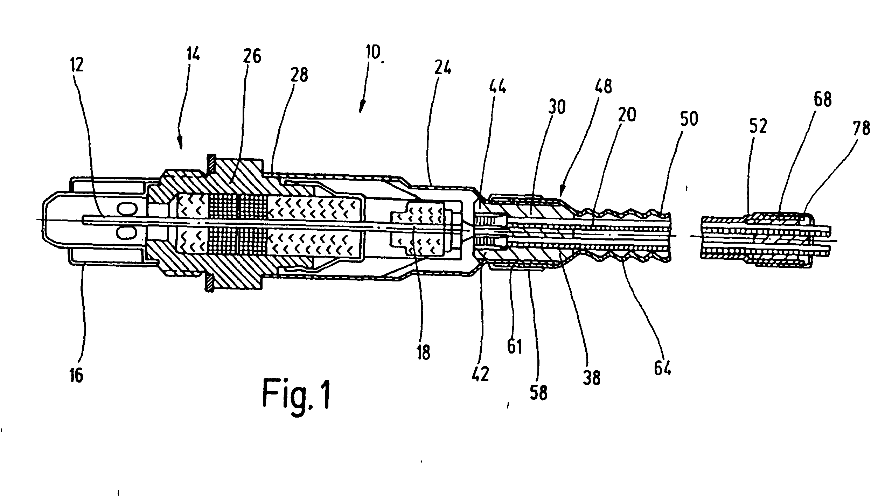

Figur 1 zeigt in einem Längsschnitt eine Meßeinrichtung 10. Im Rahmen der vorliegenden Beschreibung sollen nur die für die Erfindung wesentlichen Bestandteile erläutert werden. Der Aufbau und die Funktion der Meßeinrichtung 10 sind allgemein bekannt.

Die Meßeinrichtung 10 weist ein Sensorelement 12 auf. Das Sensorelement 12 kann an sich jedes beliebige Sensorelement zum Messen einer physikalischen Größe sein. Im gezeigten Beispiel wird davon ausgegangen, daß es sich bei dem Sensorelement 12 um einen elektrochemischen Meßfühler 14 handelt, der zur Bestimmung des Sauerstoffgehaltes in Abgasen von Verbrennungsmotoren eingesetzt wird. Das Sensorelement 12 ist in einem Gehäuse 16 angeordnet, das in einem nicht dargestellten Abgasrohr befestigbar ist. Das Gehäuse 16 ist durch eine Durchgangsöffnung des Abgasrohres geführt und mit entsprechenden Befestigungsmitteln, beispielsweise einer Überwurfmutter, arretiert. Die Befestigung des Gehäuses 16 erfolgt so, daß dieses dichtend in der Durchgangsöffnung angeordnet ist.

Innerhalb des Gehäuses 16 sind hier nicht detailliert dargestellte Elektroden sowie eine Heizeinrichtung angeordnet, mittels denen in hier nicht näher zu betrachtender Weise eine Sauerstoffkonzentration in einem Abgas eines Kraftfahrzeuges meßbar ist. Die Elektroden und die Heizeinrichtung sind über elektrische Verbindungsleitungen 20 mit einer entsprechenden Auswerte- beziehungsweise Ansteuerschaltung verbunden. Im gezeigten Beispiel wird davon ausgegangen, daß insgesamt vier Verbindungsleitungen 20 vorgesehen sind. Nach weiteren, nicht dargestellten Ausführungsbeispielen, kann jedoch die Anzahl der Verbindungsleitungen entsprechend der Ausstattung des Sensorelementes 12 variieren, das heißt, die Anzahl kann größer oder kleiner als vier sein.

Die Verbindungsleitungen 20 dienen einerseits zum Abgreifen von Sensorsignalen und andererseits zum Bereitstellen einer Heizspannung. Nachfolgend soll die Führung der Verbindungsleitungen 20 näher erläutert werden.

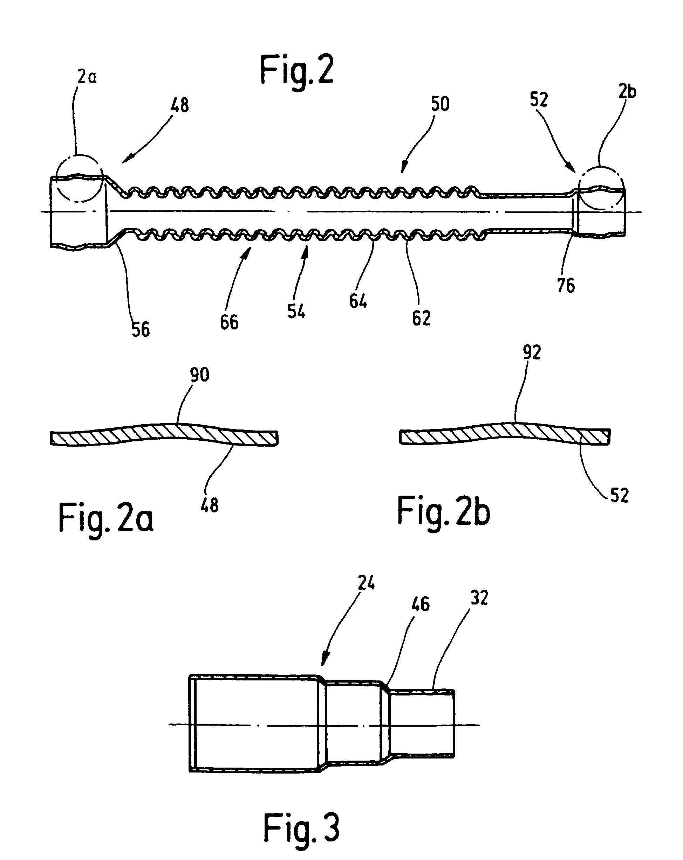

Das Gehäuse 16 geht an seinem meßstellenfernen Ende in eine Schutzhülse 24 über. Die Schutzhülse 24 kann entweder einstückig mit dem Gehäuse 16 ausgebildet sein, beziehungsweise diese ist - wie im gezeigten Beispiel - als separates Teil ausgebildet, das fest mit dem Meßfühler 14 verbunden ist. Hierzu besitzt der Meßfühler 14 einen keramischen Grundkörper 26, der einen entsprechend ausgebildeten Bund 28 aufweist. Die Schutzhülse 24 ist - wie Figur 3 zeigt - als rotationssymmetrisches Stufenteil ausgebildet, das heißt, über die axiale Erstreckung der Schutzhülse 24 verringert sich deren Durchmesser stufenweise. Hierdurch wird einerseits die mechanische Stabilität der Schutzhülse 24 erhöht und andererseits eine Anpassung eines Eingangsdurchmessers auf seiten des Bundes 28 auf einen Ausgangsdurchmesser, in der Figur 3 rechts dargestellt, an eine noch zu erläuternde Schutzeinrichtung ermöglicht.

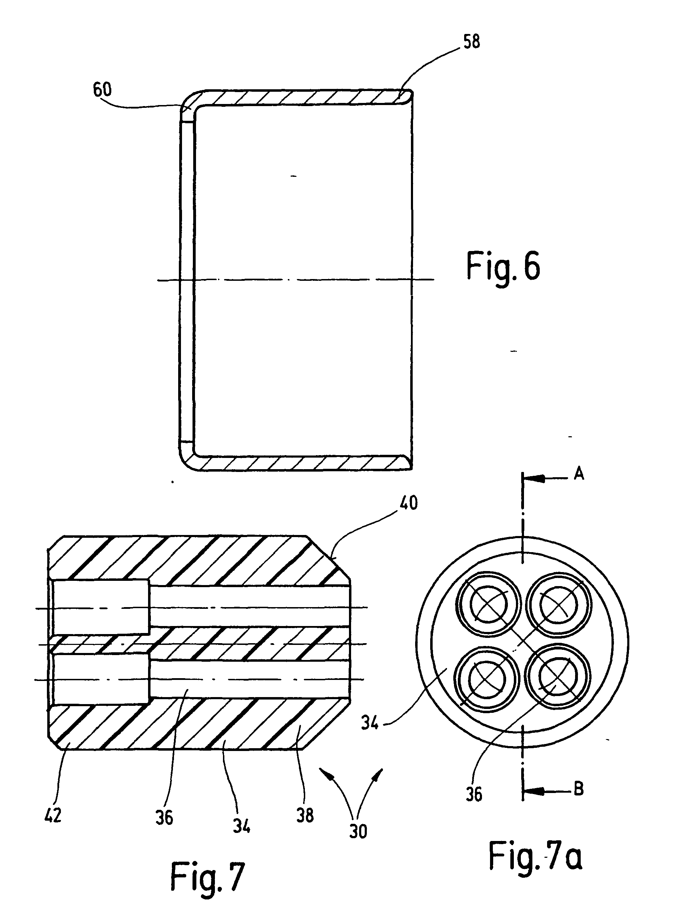

Die Schutzhülse 24 nimmt eine Tülle 30 auf, die innerhalb des durchmesserkleinsten Abschnitts 32 angeordnet ist. Die Tülle 30, die in den Figuren 7 und 7a detaillierter dargestellt ist, besitzt einen Grundkörper 34 aus einem nachgiebigen Material. Der Grundkörper 34 besitzt in axialer Richtung verlaufende Durchgangsöffnungen 36, die zur Aufnahme der Verbindungsleitungen 20 dienen. Entsprechend der Anzahl der Verbindungsleitungen 20 sind im hier gezeigten Beispiel vier Durchgangsöffnungen 36 vorgesehen. Die axiale Erstreckung des Grundkörpers 34 ist größer als die axiale Erstreckung des Abschnitts 32 der Schutzhülse 24, so daß der Grundkörper 34 mit seinem einen Ende 38 über die Schutzhülse 24 hinausragt. Das Ende 38 besitzt eine konisch verlaufende Mantelfläche 40. Der Außendurchmesser der Tülle 30 ist so gewählt, daß diese in den Abschnitt 32 der Schutzhülse 24 spielfrei eingepreßt werden kann und aufgrund ihrer Elastizität festgelegt werden kann. Hierbei erfolgt ein Zusammenpressen des Grundkörpers 34, so daß sich an seinem innerhalb der Schutzhülse 24 angeordneten Ende 42 quasi ein Bund 44 ergibt, der einen beispielweise konisch verlaufenden Übergangsbereich 46 der Schutzhülse 24 zu einem durchmessergrößeren Abschnitt hintergreift. Hierdurch wird ein dichtes Einbringen der Tülle 30 in die Schutzhülse 24 ermöglicht. Die Tülle 30 besteht vorzugsweise aus einem PTFE-Material. Die Durchgangsöffnungen 36 sind vorzugsweise derart ausgebildet, daß die Verbindungsleitungen 20 ebenfalls durch diese dichtend geführt sind, das heißt, zwischen dem Außenmantel der Verbindungsleitungen 20 und den Durchgangsöffnungen 36 besteht keine Undichtigkeit. Die Tülle 30 bildet gleichzeitig eine Zugentlastung für die Verbindungsleitungen 20.

Das Ende 38 der Tülle 30 ist innerhalb eines Befestigungsabschnittes 48 eines elastischen Hohlelementes 50 angeordnet. Eine detaillierte Darstellung des Hohlelementes 50 ist in Figur 2 gezeigt. Das Hohlelement 50 ist als Formschlauch -ausgebildet, wobei dieser an seinem einen Ende den Befestigungsabschnitt 48, an seinem anderen Ende einen Befestigungsabschnitt 52 und zwischen den Befestigungsabschnitten 48 und 52 einen Führungsabschnitt 54 aufweist. Der Befestigungsabschnitt 48 besitzt einen Innendurchmesser, der ein Aufschieben auf den Abschnitt 32 der Schutzhülse 24 gestattet. Die axiale Länge des Befestigungsabschnittes 48 ist hierbei so gewählt, daß bei aufgeschobenem Befestigungsabschnitt 48 dieser den gesamten Abschnitt 32 übergreift und ein konisch verlaufender Übergang 56 zwischen dem Befestigungsabschnitt 48 und dem Führungsabschnitt 54 an der mit gleicher Konizität verlaufenden Mantelfläche 40 der Tülle 30 anliegt. Durch diese Ausbildung sowohl der Tülle 30 als auch des Befestigungsabschnittes 48 und des Abschnitts 32 der Führungshülse 24 wird eine großflächige Dichtfläche geschaffen, die ein Eindringen von Verschmutzungen in die Schutzhülse 24 und somit in das Gehäuse 16 verhindert.

Gesichert wird diese Dichtstelle mittels einer in Figur 6 im Detail gezeigten Hülse 58, die den Dichtungsabschnitt 48 quasi umgreift. Die Hülse 58 besitzt einen nach innen geformten kragenförmigen Bund 60, der einerseits als Abstützung auf dem Abschnitt 32 und andererseits als Anschlag für den Befestigungsabschnitt 48 dient. Die Hülse 58 wird durch Aufbringen einer äußeren mechanischen Kraft zumindest bereichsweise plastisch verformt, ein sogenanntes Verstemmen, so daß der Befestigungsabschnitt 48 fest zwischen der Hülse 58 und dem Abschnitt 32 eingeklemmt ist. Insgesamt wird somit eine mechanisch sichere, das heißt auch auf Zug belastbare Verbindung, zwischen dem Hohlelement 50 und der Schutzhülse 24 beziehungsweise dem Gehäuse 16 erreicht, die zudem noch eine große Dichtwirkung aufweist.

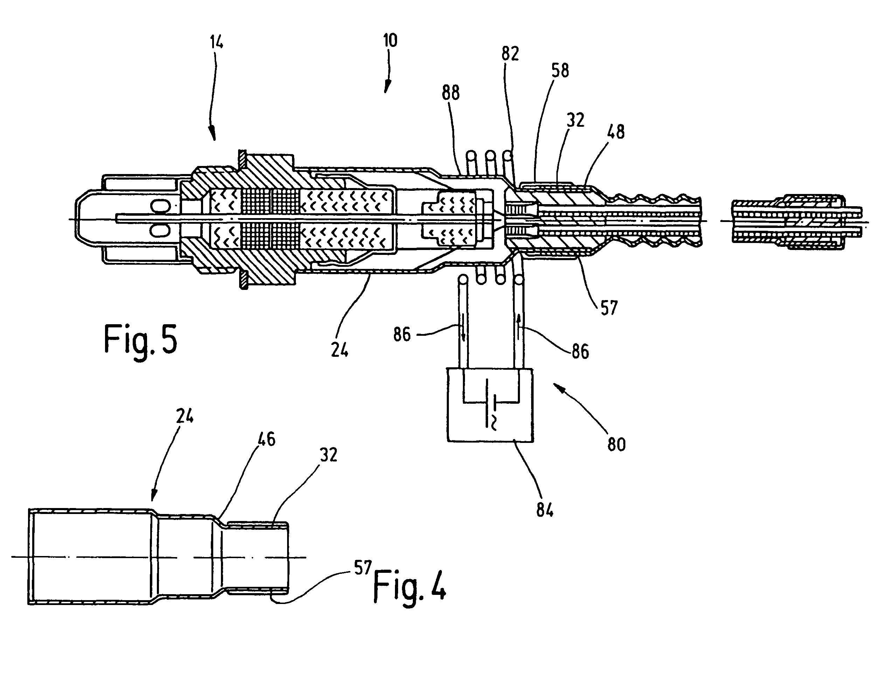

Wie in Figur 4 deutlich wird, besitzt der Abschnitt 32 der Schutzhülse 24 an seinem Außenumfang eine Beschichtung 57. Die Beschichtung 57 besteht nach einem ersten Ausführungsbeispiel aus einem PTFE-Material, das mittels geeigneter Verfahren auf den Abschnitt 32 aufgebracht ist. Hierzu sind spezielle Beschichtungstechniken bekannt, die einen Verbund von Metallen, hier die Schutzhülse 24, und PTFE-Material 32 gestatten. Die Beschichtung 57 ist mit relativ geringer Stärke aufgetragen, so daß das Aufschieben des Befestigungsendes 48 auf den Abschnitt 32 mit seiner Beschichtung 57 möglich ist.

Durch das Vorsehen der Beschichtung 57 aus einem PTFE-Material kommt es im Bereich des auf die Schutzhülse 24 aufgeschobenen Hohlelementes 50 zur Ausbildung eines Dichtsitzes 61 zwischen der fest mit der Schutzhülse 24 verbundenen Beschichtung 57 und dem Befestigungsabschnitt 48 des Hohlelementes 50. Die Dichtflächen werden einerseits durch den Außenmantel der Beschichtung 57 und andererseits durch den Innenmantel des Befestigungsabschnittes 48 gebildet. Hierdurch kommt es zur Ausbildung einer relativ großflächigen Dichtfläche, die das Eindringen von Verschmutzungen in die Schutzhülse 24 und damit in das Gehäuse 16 verhindert. Da sowohl die Beschichtung 57 als auch das Hohlelement 50 aus einem PTFE-Material bestehen, wird der Dichtsitz 61 aus zwei sich unmittelbar gegenüberliegenden Dichtflächen aus PTFE-Material gebildet. PTFE-Material hat bekanntermaßen ausgeprägte hydrophobe Eigenschaften, das heißt, in sich gegenüberliegenden Grenzschichten von PTFE-Materialien kommt es zu einem Kraftschluß. Gleichzeitig wird hiermit eine wasserabweisende Wirkung erzielt, so daß selbst nebelartige Verunreinigungen beziehungsweise Feuchtigkeiten den Dichtsitz 61 nicht passieren können.

Nach einem weiteren Ausführungsbeispiel kann die Beschichtung 57 aus einem PFA-Material bestehen. Es ist bekannt, daß PFA-Materialien bei Erwärmung auf eine bestimmte Temperatur, die zirka bei 310 bis 330 °C liegt, anfangen sich zu verflüssigen. In diesem Temperaturbereich wird eine bestimmte Viskosität des PFA-Materials erreicht, so daß dieses eine Klebwirkung entfaltet. Diese bekannten Eigenschaft des PFA-Materials wird ausgenutzt, indem der Dichtsitz 61 nach Aufschieben des Befestigungsabschnittes 48 auf die die Beschichtung 57 aufweisende Schutzhülse 24 definiert erwärmt wird.

Hierzu kann die in Figur 5 schematisch angedeutete Vorrichtung verwendet werden. Figur 5 zeigt einerseits den Längsschnitt der Meßeinrichtung 10 gemäß Figur 1, so daß insofern auf die dortige Beschreibung verwiesen werden kann.

Zur Herstellung eines form- und kraftschlüssigen Dichtsitzes 61 zwischen dem Befestigungsabschnitt 48 und der Beschichtung 57 und damit der Schutzhülse 24 ist eine insgesamt mit 80 bezeichnete Einrichtung vorgesehen. Die Einrichtung 80 besitzt eine Induktionsspule 82, deren Innendurchmesser so gewählt ist, daß die Meßeinrichtung 10 zumindest mit dem Abschnitt 32 der Schutzhülse 24 in die Induktionsspule 82 einführbar ist. Die Induktionsspule 82 ist mit einer Spannungsquelle, beispielsweise einem Hochfrequenzgenerator 84, verbunden. Ferner können die Spulenleitungen der Induktionsspule 82 als Hohlleiter ausgebildet sein, so daß ein Kühlkreislauf 86 eines Kühlmediums, beispielsweise Luft oder Wasser, aufrechterhalten werden kann. Die Funktionsweise einer derartigen, auf Basis einer Induktionsspule 82 arbeitenden Einrichtung 80 ist allgemein bekannt. Durch Einschalten des Hochfrequenzgenerators 84 wird durch die Induktionsspule 82 Wärmeenergie erzeugt, die ein definiertes Beaufschlagen der Meßeinrichtung 10 mit dieser Wärmeenergie ermöglicht. Da die Schutzhülse 24 aus einem metallischen Material besteht, eignet sich diese als Wärmeleiter. Durch Erwärmung der Schutzhülse 24 in ihrem Abschnitt 88 erfolgt eine Wärmeleitung unter anderem in Richtung des Abschnittes 32, so daß die auf dem Abschnitt 32 aufgebrachte Beschichtung 57 aus dem PFA-Material ebenfalls erwärmt wird. Durch definierte Erwärmung, die beispielsweise über eine Zeit der Erwärmung, eine Höhe des Stromflusses durch die Induktionsspule 82 oder andere geeignete Vorkehrungen eingestellt werden kann, erfolgt ein definiertes Erwärmen der Beschichtung 57 derart, daß diese viskos wird.

Durch das anschließende Verstemmen der Hülse 58 wird der Befestigungsabschnitt 48 gegen die, infolge der Wärmeeinwirkung plastifizierte Beschichtung 57 gedrückt, so daß sich nach Erkalten und Wiedererstarren der Beschichtung 57 ein inniger form- und kraftschlüssiger Verbund zwischen dem Befestigungsabschnitt 48 und der Beschichtung 57 ergibt. Hierdurch wird der Dichtsitz 61 mit einer dauerhaften, großen Dichtwirkung ausgebildet.

Sowohl bei der Ausbildung der Beschichtung 57 aus einem PTFE-Material oder einem PFA-Material wird sichergestellt, daß aufgrund der während des bestimmungsgemäßen Einsatzes der Meßeinrichtung 10 auftretenden Betriebstemperaturen von beispielsweise zirka 250 bis 300 °C, eine Temperaturbeständigkeit des Dichtsitzes 61 gegeben ist, so daß eine beständige Abdichtung der Meßeinrichtung 10 vor Eintritt von äußeren Verunreinigungen sichergestellt ist.

Ein Mantel 62 (Figur 2) des Führungsabschnittes 54 des Hohlelementes 50 besitzt eine Strukturierung 64. Die Strukturierung 64 besteht darin, daß über die axiale Erstreckung des Führungsabschnittes 54 der Mantel 62 Abschnitte mit unterschiedlichen, gegebenenfalls sich wiederholenden Durchmessern aufweist. Die Strukturierung 64 kann so ausgebildet sein, daß sich eine spiralförmige Struktur ergibt. Nach weiteren Ausführungsbeispielen kann der Mantel 62 zueinander beabstandete konzentrische Ringe aufweisen. Ein Durchmesser der Ringe kann hierbei über die axiale Länge des Führungsabschnittes 54 variieren, das heißt, dieser wird beispielsweise von den Befestigungsabschnitten 48 und/oder 52 ausgehend geringer oder größer. Eine weitere Ausführungsvariante besteht darin, daß die Strukturierung 64 die Form eines Außengewindes aufweist. Hierbei kann wiederum die sich ergebende gewindeförmige Strukturierung 64 über die axiale Erstreckung des Führungsabschnittes 54 unterschiedliche Gewinde-Steigungen aufweisen.

Durch die Form der Strukturierung 64, die wie erläutert unterschiedlichster Art sein kann, wird eine mechanische Stabilisierung des Hohlelementes 50 erreicht, das aber trotzdem aufgrund dessen elastischen Materials insgesamt biegbar bleibt. Da das Hohlelement 50 die Verbindungskabel 20 aufnimmt, bildet dieses quasi eine Schutzeinrichtung 66 für die Verbindungskabel 20. Bei erhaltengebliebener Elastizität des Hohlelementes 50, die zur Führung der Verbindungskabel 20 an ihrem Einbauort notwendig ist, wird gleichzeitig durch die Strukturierung 64 ein Knickschutz erzielt, der ein scharfkantiges Abknicken des elastischen Hohlelementes 50 und somit der darin geführten Verbindungsleitungen 20 verhindert. Eine zusätzliche Abstützung wird bei einem eventuellen Abbiegen des Hohlelementes 50, wobei wie erläutert ein scharfkantiges Abknicken nicht möglich ist, durch den konischen Abschnitt 56 zwischen dem Befestigungsabschnitt 48 und dem Führungsabschnitt 54 sichergestellt, indem dieser an der konischen Mantelfläche 40 der Tülle 30 anliegt.

Da das elastische Hohlelement 50 aus einem PTFE-Material besteht, besteht neben dem mechanischen Schutz der Verbindungsleitungen 20 gleichzeitig ein Schutz vor unzulässiger Erwärmung der Verbindungsleitungen 20. PTFE-Material besitzt bekannterweise eine hohe Wärmebeständigkeit, die jedenfalls im Bereich der am Einbauort der Meßeinrichtung 10 erwarteten Temperaturen von beispielsweise zirka 250 bis 300 °C ein dauerndes geschütztes Führen der Verbindungsleitungen 20 gestattet und eine beständige Abdichtung der Meßeinrichtung 10 vor Eintritt von äußeren Verunreinigungen sicherstellt.

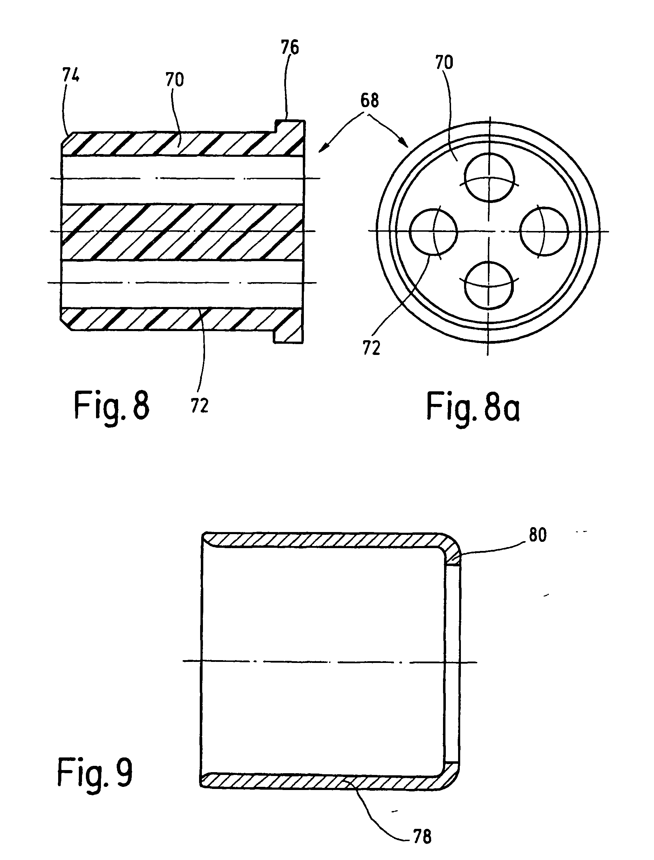

Der meßgasferne Befestigungsabschnitt 52 nimmt eine weitere Tülle 68 auf. Die Tülle 68, die in Figur 8 näher gezeigt ist, ist ähnlich wie die Tülle 30 in den Befestigungsabschnitt 52 eingeschoben. Die Tülle 68 besitzt einen Grundkörper 70, der entsprechend der Anzahl der Verbindungsleitungen 20 Durchgangsöffnungen 72 aufweist. Der Grundkörper 70 besitzt - in axialer Richtung gesehen - an seinem einen Ende eine konische Abschrägung 74 und an seinem anderen Ende einen Kragen 76. Anhand dem in Figur 1 gezeigten montierten Zustand der gesamten Meßeinrichtung 10 wird deutlich, daß die Abschrägung 74 sich an einem konisch verlaufenden Abschnitt 76 des Hohlelementes 50, der zwischen dem Befestigungsabschnitt 52 und dem Führungsabschnitt 54 liegt, abstützt. Der Kragen 76 dient als Anschlag für den auf die Tülle 70 aufgeschobenen Befestigungsabschnitt 52. Der Befestigungsabschnitt 52 -und damit die Tülle 68- wird von einer Hülse 78 umgriffen. Die Hülse 78 besitzt, wie Figur 9 näher zeigt, einen radial nach innen gerichteten kragenförmigen Bund 80, der als Anschlag für den Kragen 76 der Tülle 70 dient. Die aufgeschobene Tülle 78 wird ebenfalls, zumindest bereichsweise, plastisch verformt, so daß der Befestigungsabschnitt 52 zwischen der Tülle 70 und der Hülse 78 quasi eingequetscht und damit arretiert ist. Aufgrund der relativ großen Berührungsfläche zwischen dem Befestigungsabschnitt 58 und der Hülse 78 beziehungsweise der Tülle 70 ergibt sich eine großflächige Dichtfläche, die einen Eintritt von Verunreinigungen beziehungsweise Verschmutzungen in das Hohlelement 50 verhindert. Die Verbindungsleitungen 20 sind durch die Durchgangsöffnungen 72 der Tülle 70 hindurchgeführt, wobei hier ebenfalls, analog der Tülle 30, eine dichte Führung gewährleistet ist. Außerhalb der Tülle 70 können die Verbindungsleitungen 20 entweder -eine hier nicht dargestellte Kontakteinrichtung- zum Verbinden mit zu einer Auswerteschaltung führenden weiteren Verbindungsleitungen aufweisen, beziehungsweise die Verbindungsleitungen 20 sind direkt bis zu dieser Schaltung geführt.

Die Tülle 68 besteht aus einem elastischen Material, beispielsweise Silikongummi, so daß diese unter leichtem Zusammenpressen in den Befestigungsabschnitt 52 eingedrückt werden kann. Hierdurch wird die Dichtwirkung sowohl zwischen der Tülle 70 und dem Befestigungsabschnitt 52 als auch zwischen der Tülle 70 und den durch den Durchgangsöffnungen 72 hindurchgeführten Verbindungsleitungen 20 gewährleistet. Sollte der Befestigungsabschnitt 52 noch in einem relativ hochtemperaturbelasteten Einbaubereich angeordnet sein, kann die Tülle 70 ebenfalls aus einem PTFE-Material bestehen. In diesem Falle kann die Tülle 70 beispielsweise in den Befestigungsabschnitt 52, der ebenfalls wie das gesamte Hohlelement aus einem PTFE-Material besteht, eingeklebt werden, indem dieser Bereich kurzzeitig über eine Schmelztemperatur des PTFE-Materials erwärmt wird, so daß eine Verschmelzung zwischen der Tülle 70 und dem Befestigungsabschnitt 52 erfolgt.

Die Befestigungsabschnitte 48 und 52 besitzen, wie Figur 2a und 2b verdeutlicht, jeweils eine noppenartige Erhöhung 90 beziehungsweise 92. Diese noppenartigen Erhöhungen 90 beziehungsweise 92 dienen zur Fixierung der Hülsen 58 beziehungsweise 78 während der Montage. Für die Dichtwirkung beziehungsweise den mechanischen Knickschutz des Hohlelementes 50 besitzen die Erhöhungen 82 und 84 keine funktionelle Bedeutung.

## Patentansprüche

1. Messeinrichtung, insbesondere elektrochemische Messfühler, mit einem an einer Messstelle angeordneten Sensorelement, wobei das Sensorelement in einem Gehäuse angeordnet ist,das über elektrische Verbindungsleitungen mit einer Messstellenfernen Auswerteschaltung verbunden ist, und die elektrischen Verbindungsleitungen zumindest in der Nähe der Messstelle in einer Schutzeinrichtung geführt sind, **dadurch gekennzeichnet, dass** die Schutzeinrichtung (66) mit dem Gehäuse (16) über eine das Gehäuse (16) und die Schutzeinrichtung (66) umgreifende hülsenartige Befestigungseinrichtung zur Ausbildung eines Dichtsitzes (61) kraft- und formschlüssig verbunden ist, wobei das Gehäuse (16) im Bereich des Dichtsitzes (61) zumindest bereichsweise eine Beschichtung (57) aufweist und ein Form- und Kraftschluss durch definiertes, die Beschichtung (57) plastifizierendes Erwärmen der Beschichtung (57) und eine gleichzeitige und/oder nachfolgende Verformung durch eine mechanische Kraft erzielbar ist.

2. Messeinrichtung nach Anspruch 1, **dadurch gekennzeichnet, dass** die Schutzeinrichtung (66) ein elastisches Hohlelement (50) ist, das zur Ausbildung des Dichtsitzes (61) einen Befestigungsabschnitt (48) aufweist, der an ein Paßstück des Gehäuses (16) angreift.

3. Messeinrichtung nach einem der vorhergehenden Ansprüche, **dadurch gekennzeichnet, dass** ein Mantel (62) des Hohlelementes (50) zumindest bereichsweise eine Strukturierung (64) aufweist, wobei die Strukturierung (64) sich über einen Führungsabschnitt (54) des Hohlelementes (50) erstreckt.

4. Messeinrichtung nach einem der vorhergehenden Ansprüche, **dadurch gekennzeichnet, dass** zur Ausbildung der Strukturierung (64) der Mantel (62) Abschnitte mit unterschiedlichen Durchmessern aufweist.

5. Messeinrichtung nach einem der vorhergehenden Ansprüche, **dadurch gekennzeichnet, dass** die Abschnitte mit unterschiedlichen Durchmessern sich über die axiale Erstreckung des _ Führungsabschnittes (54) wiederholen.

6. Messeinrichtung nach einem der vorhergehenden Ansprüche, **dadurch gekennzeichnet, dass** die Strukturierung (64) eine Spiralform besitzt.

7. Messeinrichtung nach einem der vorhergehenden Ansprüche, **dadurch gekennzeichnet, dass** die Strukturierung (64) von zueinander beabstandeten konzentrischen Ringen gebildet wird.

8. Messeinrichtung nach einem der vorhergehenden Ansprüche, **dadurch gekennzeichnet, dass** die Strukturierung (64) die Form eines Außengewindes des Mantels (62) aufweist.

9. Messeinrichtung nach Anspruch 7, **dadurch gekennzeichnet, dass** das Außengewinde über die axiale Erstreckung des Führungsabschnittes (54) unterschiedliche Steigungen aufweist.

10. Messeinrichtung nach einem der vorhergehenden Ansprüche, **dadurch gekennzeichnet, dass** das Hohlelement (50) Befestigungsabschnitte (48, 52) aufweist, die beidseitig des Führungsabschnittes (54) angeordnet sind.

11. Messeinrichtung nach einem der vorhergehenden Ansprüche, **dadurch gekennzeichnet, dass** die Befestigungsabschnitte (48, 52) Tüllen (30, 68) aufnehmen, die Durchgangsöffnungen (36, 72) zur Führung der elektrischen Verbindungsleitungen (20) aufweisen.

12. Messeinrichtung nach einem der vorhergehenden Ansprüche, **dadurch gekennzeichnet, dass** die Befestigungsabschnitte (48, 52) mittels zumindest teilweise plastisch verformten Hülsen (58, 78) arretiert sind.

13. Messeinrichtung nach einem der vorhergehenden Ansprüche, **dadurch gekennzeichnet, dass** die Hülsen (58, 78) mit den Befestigungsabschnitten (48, 52) und diese mit den Tüllen (30, 68) zur Ausbildung einer großen Dichtfläche einen großflächigen Berührungskontakt aufweisen.

14. Messeinrichtung nach einem der vorhergehenden Ansprüche, **dadurch gekennzeichnet, dass** zwischen dem Befestigungsabschnitt (48) und der Tülle (30) ein die Tülle (30) teilweise umgreifenden Abschnitt (32) einer mit einem Gehäuse (16) verbundenen Führungshülse (24) angeordnet ist.

15. Messeinrichtung nach einem der vorhergehenden Ansprüche, **dadurch gekennzeichnet, dass** die Tüllen (30, 68) konische Mantelflächen (40, 74) aufweisen, an denen sich mit gleicher Konizität verlaufende Übergänge (56, 76) zwischen den Befestigungsabschnitten (48, 52) und dem Führungsabschnitt (54) des Hohlelementes (50) abstützen.

16. Messeinrichtung nach Anspruch 1, **dadurch gekennzeichnet, dass** die Beschichtung (57) eine PTFE-Beschichtung ist.

17. Messeinrichtung nach Anspruch 1, **dadurch gekennzeichnet, dass** die Beschichtung (57) eine PFA-Beschichtung ist.

18. Messeinrichtung nach Anspruch 1, **dadurch gekennzeichnet, dass** die Erwärmung induktiv erfolgt.

19. Messeinrichtung nach einem der vorhergehenden Ansprüche, **dadurch gekennzeichnet, dass** die Schutzeinrichtung (66) aus einem PTFE-Material besteht.

## Claims

1. Measurement device, in particular electrochemical measurement sensor, having a sensor element which is arranged at a measurement location, the sensor element being arranged in a housing which is connected to an evaluation circuit that is remote from the measurement location by means of electrical connecting lines, and the electrical connecting lines being routed in a protective device at least in the vicinity of the measurement location, **characterized in that** the protective device (66) is connected to the housing (16) in a force-fitting and form-fitting manner by means of a sleeve-like fastening device, which engages around the housing (16) and the protective device (66).., in order to form a sealing seat (61), at least regions of the housing (16) having a coating (57) in the region of the sealing seat (61), and a form fit and a force fit being able to be achieved by defined heating of the coating (57), which plasticizes the coating (57), and simultaneous and/or subsequent deformation using a mechanical force.

2. Measurement device according to Claim 1,
**characterized in that** the protective device (66) is an elastic hollow element (50) having a fastening section (48) for the purpose of forming the sealing seat (61), said fastening section engaging with an adapter piece of the housing (16).

3. Measurement device according to one of the preceding claims, **characterized in that** at least regions of a sheath (62) of the hollow element (50) have structuring (64), the structuring (64) extending over a guide section (54) of the hollow element (50).

4. Measurement device according to one of the preceding claims, **characterized in that** the sheath (62) has sections having different diameters for the purpose of forming the structuring (64).

5. Measurement device according to one of the preceding claims, **characterized in that** the sections having different diameters are repeated over the axial extent of the guide section (54).

6. Measurement device according to one of the preceding claims, **characterized in that** the structuring (64) has the form of a helix.

7. Measurement device according to one of the preceding claims, **characterized in that** the structuring (64) is formed by concentric rings which are at a distance from one another.

8. Measurement device according to one of the preceding claims, **characterized in that** the structuring (64) has the form of an external thread of the sheath (62).

9. Measurement device according to Claim 7, **characterized in that** the external thread has different pitches over the axial extent of the guide section (54).

10. Measurement device according to one of the preceding claims, **characterized in that** the hollow element (50) has fastening sections (48, 52) which are arranged on both sides of the guide section (54).

11. Measurement device according to one of the preceding claims, **characterized in that** the fastening sections (48, 52) hold bushes (30, 68) which have passage openings (36, 72) for routing the electrical connecting lines (20).

12. Measurement device according to one of the preceding claims, **characterized in that** the fastening sections (48, 52) are arrested using at least partially plastically deformed sleeves (58, 78).

13. Measurement device according to one of the preceding claims, **characterized in that** the sleeves (58, 78) touch the fastening sections (48, 52) and the latter touch the bushes (30, 68) over a large area in order to form a large sealing surface.

14. Measurement device according to one of the preceding claims, **characterized in that** a section (32) of a guide sleeve (24), which is connected to a housing (16), is arranged between the fastening section (48) and the bush (30), said section partially engaging around the bush (30).

15. Measurement device according to one of the preceding claims, **characterized in that** the bushes (30, 68) have conical lateral surfaces (40, 74) on which junctions (56, 76) between the fastening sections (48, 52) and the guide section (54) of the hollow element (50) are supported, said junctions running with the same conicity.

16. Measurement device according to Claim 1,
**characterized in that** the coating (57) is a PTFE coating.

17. Measurement device according to Claim 1, **characterized in that** the coating (57) is a PFA coating.

18. Measurement device according to Claim 1, **characterized in that** the heating is effected inductively.

19. Measurement device according to one of the preceding claims, **characterized in that** the protective device (66) comprises a PTFE material.

## Revendications

1. Installation de mesure, notamment capteur de mesure électrochimique comportant un élément capteur installé en un point de mesure, l'élément capteur étant logé dans un boîtier relié par des lignes de liaisons électriques à un circuit d'exploitation éloigné du point de mesure et les lignes de liaisons électriques passant au moins à proximité du point de mesure dans une installation de protection,
**caractérisée en ce que**
l'installation de protection (66) est reliée par une liaison par la force et la forme au boîtier (16) par une installation de fixation en forme de manchon entourant le boîtier (16) et l'installation de protection (66) pour réaliser un siège d'étanchéité (61),
le boîtier (16) ayant au moins par endroits un revêtement (67) au niveau du siège d'étanchéité (61) et la liaison par la forme et la force se réalise par un échauffement plastifiant, défini, du revêtement (57) et une déformation simultanée et/ou consécutive réalisée par une force mécanique.

2. Installation de mesure selon la revendication 1,
**caractérisée en ce que**
l'installation de protection (66) est un élément creux (50), élastique, muni d'un segment de fixation (48) pour réaliser le siège d'étanchéité (61), ce segment venant sur une pièce ajustée du boîtier (16).

3. Installation de mesure selon l'une des revendications précédentes,
**caractérisée en ce qu'**
une enveloppe (62) de l'élément creux (50) comporte au moins par zones une structure (64) qui s'étend sur un segment de guidage (54) de l'élément creux (50).

4. Installation de mesure selon l'une des revendications précédentes,
**caractérisée en ce que**
l'enveloppe (62) comporte des segments de diamètres différents pour réaliser la structure (64).

5. Installation de mesure selon l'une des revendications précédentes,
**caractérisée en ce que**
les segments de diamètres différents se répètent suivant l'extension axiale du segment de guidage (54).

6. Installation de mesure selon l'une des revendications précédentes,
**caractérisée en ce que**
la structure (64) a une forme de spirale.

7. Installation de mesure selon l'une des revendications précédentes,
**caractérisée en ce que**
la structure (64) est formée par des anneaux concentriques écartés les uns des autres.

8. Installation de mesure selon l'une quelconque des revendications précédentes,
**caractérisée en ce que**
la structure (64) a la forme d'un filetage extérieur de.l'enveloppe (62).

9. Installation de mesure selon la revendication 7,
**caractérisée en ce que**
le filetage extérieur présente des pas différents suivant l'extension axiale du segment de guidage (54).

10. Installation de mesure selon l'une des revendications précédentes,
**caractérisée en ce que**
l'élément creux (50) comporte des segments de fixation (48, 52) prévus des deux côtés du segment de guidage (54).

11. Installation de mesure selon l'une des revendications précédentes,
**caractérisée en ce que**
les segments de fixation (48, 52) reçoivent des douilles (30, 68) avec des passages (36, 72) pour des lignes de liaisons électriques (20).

12. Installation de mesure selon l'une des revendications précédentes,
**caractérisée en ce que**
les segments de fixation (48, 52) sont bloqués à l'aide de manchons (58, 78) qui sont au moins en partie déformables plastiquement.

13. Installation de mesure selon l'une des revendications précédentes,
**caractérisée en ce que**
les manchons (58, 78) ont une surface de contact importante avec les segments de fixation (48, 52) et ceux-ci avec les manchons (30, 68) pour former une grande surface d'étanchéité.

14. Installation de mesure selon l'une quelconque des revendications précédentes,
**caractérisée en ce qu'**
un segment (32) d'un manchon de guidage (24) relié au boîtier ( 16), qui entoure en partie le manchon (30), est prévu entre le segment de fixation (48) et le manchon (30).

15. Installation de mesure selon l'une quelconque des revendications précédentes,
**caractérisée en ce que**
les manchons (30, 68) ont des surfaces-enveloppes (40, 74) coniques, sur lesquelles s'appuient des zones transitoires (56, 76) de même conicité, entre les segments de fixation (48, 52) et le segment de guidage (54) de l'élément creux (50).

16. Installation de mesure selon la revendication 1,
**caractérisée en ce que**
le revêtement (57) est un revêtement en PTFE.

17. Installation de mesure selon la revendication 1,
**caractérisée en ce que**
le revêtement (57) est un revêtement en PFA.

18. Installation de mesure selon la revendication 1,
**caractérisée en ce que**
le chauffage se fait par induction.

19. Installation de mesure selon l'une quelconque des revendications précédentes,
**caractérisée en ce que**
l'installation de protection (66) est en PTFE.
